(19) Europäisches Patentamt
European Patent Office
Office européen des brevets

(11) **EP 4 645 443 A1**

(12) **EUROPEAN PATENT APPLICATION**
published in accordance with Art. 153(4) EPC

(43) Date of publication:
**05.11.2025 Bulletin 2025/45**

(21) Application number: **25732667.8**

(22) Date of filing: **26.02.2025**

(51) International Patent Classification (IPC):
**H01M 4/136** (2010.01)          **H01M 4/1397** (2010.01)
**H01M 10/0525** (2010.01)

(52) Cooperative Patent Classification (CPC):
**C01B 25/45; H01M 4/136; H01M 4/1397;
H01M 10/0525;** Y02E 60/10

(86) International application number:
**PCT/CN2025/079362**

(87) International publication number:
**WO 2025/185506 (12.09.2025 Gazette 2025/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2024 CN 202410269102**

(71) Applicant: **Contemporary Amperex Technology
Co., Limited
Ningde, Fujian 352100 (CN)**

(72) Inventors:
• **LIU, Hongyu
Ningde, Fujian 352100 (CN)**

• **JIANG, Jihong
Ningde, Fujian 352100 (CN)**
• **BIE, Changfeng
Ningde, Fujian 352100 (CN)**
• **HE, Siyuan
Ningde, Fujian 352100 (CN)**
• **NI, Huan
Ningde, Fujian 352100 (CN)**
• **LIU, Na
Ningde, Fujian 352100 (CN)**

(74) Representative: **Gong, Jinping
CocreateIP
Neumarkter Straße 21
81673 München (DE)**

(54) **POSITIVE ELECTRODE SHEET AND MANUFACTURING METHOD THEREFOR, SECONDARY BATTERY, AND ELECTRICAL DEVICE**

(57)    The present application provides a positive electrode plate and a preparation method therefor, as well as a secondary battery, and an electrical apparatus. The positive electrode plate of the present application has a higher compacted density.

**5**

**FIG. 1**

EP 4 645 443 A1

# EP 4 645 443 A1

## Description

### CROSS-REFERENCE

The present application is based on Chinese patent application No. 202410269102.7 filed on March 8, 2024 and entitled "POSITIVE ELECTRODE PLATE AND PREPARATION METHOD THEREFOR, AS WELL AS SECONDARY BATTERY, AND ELECTRICAL APPARATUS", which is incorporated into the present application by reference in its entirety.

### TECHNICAL FIELD

The present application relates to the technical field of secondary batteries, and in particular to a positive electrode plate and a preparation method therefor, as well as a secondary battery, and an electrical apparatus.

### BACKGROUND

As the positive electrode active material of secondary batteries, lithium iron phosphate has the advantages of low cost, high safety and excellent cycling performance. However, compared with materials such as NCM, LMO, and $LiCoO_2$, lithium iron phosphate materials have a lower powder compacted density, resulting in a lower electrode plate compacted density. Therefore, it is necessary to provide a positive electrode plate containing lithium iron phosphate, which has a higher compacted density.

### SUMMARY OF THE INVENTION

The present application is conducted in view of the above issues, and its purpose is to provide a positive electrode plate and a preparation method therefor, as well as a secondary battery, and an electrical apparatus. The positive electrode plate has a higher compacted density.

The inventors have found that the above purpose can be achieved by adopting the technical solutions of the present invention.

A first aspect of the present application provides a positive electrode plate, the positive electrode plate includes a positive electrode active material, the positive electrode active material includes lithium iron phosphate particles, the lithium iron phosphate particles include first lithium iron phosphate particles, second lithium iron phosphate particles and third lithium iron phosphate particles, wherein,

the long diameter of primary particles of the lithium iron phosphate particles is r1, the short diameter of primary particles of the lithium iron phosphate particles is r2, the primary particle size of the first lithium iron phosphate particles satisfies: $50nm \leq (r1+r2)/2 \leq 200nm$; the primary particle size of the second lithium iron phosphate particles satisfies: $500nm \leq (r1+r2)/2 \leq 1000nm$; the primary particle size of the third lithium iron phosphate particles satisfies: $1000nm < (r1+r2)/2 \leq 5000nm$;

based on the total number of the first lithium iron phosphate particles, the second lithium iron phosphate particles and the third lithium iron phosphate particles, the number proportion of the first lithium iron phosphate particles is 5-27%; the number proportion of the second lithium iron phosphate particles is 8-37%; and the number proportion of the third lithium iron phosphate particles is 36-86%.

In any embodiment, based on the total number of the first lithium iron phosphate particles, the second lithium iron phosphate particles, and the third lithium iron phosphate particles:

the number proportion of the first lithium iron phosphate particles is 11.76%-20.41%;
the number proportion of the second lithium iron phosphate particles is 17.65%-23.44%; and/or
the number proportion of the third lithium iron phosphate particles is 57.14%-70.59%.

The positive electrode plate of the present application has a higher compacted density.

In any embodiment, the polydiversity index PDI of the lithium iron phosphate particles is ≥1.

In any embodiment, the polydiversity index PDI of the lithium iron phosphate particles is 1≤PDI≤1.6.

In any embodiment, the roundness T1 of the first lithium iron phosphate particles is greater than or equal to the roundness T3 of the third lithium iron phosphate particles; and/or

the roundness T2 of the second lithium iron phosphate particles is greater than or equal to the roundness T3 of the third lithium iron phosphate particles.

In any embodiment, the roundness T1 of the first lithium iron phosphate particles satisfies: $0.6 < T1 \leq 1$; the roundness T2 of the second lithium iron phosphate particles satisfies: $0.5 \leq T2 \leq 1$; and/or the roundness T3 of the third lithium iron phosphate particles satisfies: $0.4 \leq T3 \leq 1$.

In any embodiment, the roundness T1 of the first lithium iron phosphate particles satisfies: $0.8 \leq T1 \leq 1$; the roundness T2 of the second lithium iron phosphate particles satisfies: $0.7 \leq T2 \leq 1$; and/or the roundness T3 of the third lithium iron phosphate particles satisfies: $0.6 \leq T3 \leq 1$.

In any embodiment, the first lithium iron phosphate particle has a molecular formula of $Li_{m1}Fe_{x1}P_{y1}O_{z1}Q1_{q1}$, where Q1 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m1 \leq 1.15$, $0.9 \leq x1 \leq 1$, $0.95 \leq y1 \leq 1$, $3.5 \leq z1 \leq 4$, $0 \leq q1 \leq 0.1$, and/or,

the second lithium iron phosphate particle has a molecular formula of $Li_{m2}Fe_{x2}P_{y2}O_{z2}Q2_{q2}$, where Q2 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m2 \leq 1.15$, $0.9 \leq x2 \leq 1$, $0.95 \leq y2 \leq 1$, $3.5 \leq z2 \leq 4$, $0 \leq q2 \leq 0.1$, and/or,

the third lithium iron phosphate particle has a molecular formula of $Li_{m3}Fe_{x3}P_{y3}O_{z3}Q3_{q3}$, where Q3 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m3 \leq 1.15$, $0.9 \leq x3 \leq 1$, $0.95 \leq y3 \leq 1$, $3.5 \leq z3 \leq 4$, $0 \leq q3 \leq 0.1$.

In any embodiment, Q1, Q2 and Q3 each independently include at least one of Ti, V, Mg and Nb.

In any embodiment, the content of Ti, V, Mg and/or Nb elements is 2400-3200ppm, calculated based on the total weight of the first lithium iron phosphate particles;

the content of Ti, V, Mg and/or Nb elements is 1300-3000ppm, calculated based on the total weight of the second lithium iron phosphate particles; and/or

the content of Ti, V, Mg and/or Nb elements is 450-1200ppm, calculated based on the total weight of the third lithium iron phosphate particles.

A second aspect of the present application provides a preparation method for a positive electrode plate, the preparation method for a positive electrode plate includes a preparation method for a positive electrode active material, and the preparation method for a positive electrode active material comprises the following steps:

providing raw materials containing at least a lithium source, an iron source, and a phosphorus source, and performing sintering for at least one time to obtain the positive electrode active material;

the iron source includes a first iron source, a second iron source and a third iron source, the average particle size of primary particles of the first iron source is 80-150nm, the average particle size of primary particles of the second iron source is 200-400nm, and the average particle size of primary particles of the third iron source is 550-2200nm.

In any embodiment, the sintering temperature is 750-820°C, and the sintering time is 10-14h.

A third aspect of the present application provides a secondary battery, which comprises the positive electrode plate of the first aspect of the present application or a positive electrode plate obtained by the preparation method of the second aspect of the present application.

A fourth aspect of the present application provides an electrical apparatus, which comprises the secondary battery according to the third aspect of the present application.

## BRIEF DESCRIPTION OF DRAWINGS

FIG. 1 is a schematic diagram of a secondary battery according to an embodiment of the present application.

FIG. 2 is an exploded view of the secondary battery according to an embodiment of the present application shown in FIG. 1.

FIG. 3 is a schematic diagram of a battery module according to an embodiment of the present application.

FIG. 4 is a schematic diagram of a battery pack according to an embodiment of the present application.

FIG. 5 is an exploded view of the battery pack according to an embodiment of the present application shown in FIG. 4.

FIG. 6 is a schematic diagram of an electrical apparatus in which a secondary battery is used as a power source according to an embodiment of the present application.

Description of reference numerals:

1. Battery pack; 2. Upper box; 3. Lower box; 4. Battery module; 5. Secondary battery; 51. Case; 52. Electrode assembly; 53. Top cover assembly.

**DETAILED DESCRIPTION**

Embodiments of a positive electrode plate and a preparation method therefor, as well as a secondary battery, and an electrical apparatus according to the present application are specifically disclosed below with appropriate reference to the detailed description of the drawings. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order. For example, the method may comprise steps (a), (b) and (c), or may further comprise steps (a), (c) and (b), or may further comprise steps (c), (a) and (b), and the like.

Unless otherwise specifically stated, the terms "comprising" and "including" mentioned in the present application may be open-ended, or may be closed-ended. For example, the "comprising" and "including" may indicate that it is also possible to comprise or comprise other components not listed, and it is also possible to comprise or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

As the positive electrode active material of secondary batteries, lithium iron phosphate has the advantages of low cost, high safety and excellent cycling performance. However, compared with materials such as NCM, LMO, and $LiCoO_2$, lithium iron phosphate materials have a lower powder compacted density, resulting in a lower electrode plate compacted density. Therefore, it is necessary to provide a positive electrode plate containing lithium iron phosphate, which has a higher compacted density.

Based on this, the present application puts forward technical solutions to solve the above technical problems.

A first aspect of the present application provides a positive electrode plate, the positive electrode plate includes a positive electrode active material, the positive electrode active material includes lithium iron phosphate particles, the lithium iron phosphate particles include first lithium iron phosphate particles, second lithium iron phosphate particles and third lithium iron phosphate particles, wherein,

the long diameter of primary particles of the lithium iron phosphate particles is r1, the short diameter of primary particles of the lithium iron phosphate particles is r2, the primary particle size of the first lithium iron phosphate particles satisfies: 50 nanometers (mn)≤(r1+r2)/2≤200mn; the primary particle size of the second lithium iron phosphate particles satisfies:

500nm≤(r1+r2)/2≤1000nm; the primary particle size of the third lithium iron phosphate particles satisfies: 1000nm<(r1+r2)/2≤5000nm.

In some embodiments, based on the total number of the first lithium iron phosphate particles, the second lithium iron phosphate particles and the third lithium iron phosphate particles, the number proportion of the first lithium iron phosphate particles is 5-27%; the number proportion of the second lithium iron phosphate particles is 8-37%; and the number proportion of the third lithium iron phosphate particles is 36-86%.

In some embodiments, based on the total number of the first lithium iron phosphate particles, the second lithium iron phosphate particles and the third lithium iron phosphate particles, the number proportion of the first lithium iron phosphate particles is 11.76%-20.41%; the number proportion of the second lithium iron phosphate particles is 17.65%-23.44%; and the number proportion of the third lithium iron phosphate particles is 57.14%-70.59%.

When the above conditions are met, by mixing large particles with a larger primary particle size, medium particles with a medium primary particle size, and small particles with a smaller primary particle size in a specific quantity ratio, and by controlling the size, size difference and quantity ratio of the particles, the medium particles and small particles can densely fill the pores between the large particles, and the small particles can densely fill the pores between the medium particles and between the medium particles and the large particles, thereby achieving a higher compacted density of the positive electrode plate containing the positive electrode active material.

Herein, "primary particles" refer to particles that, as shown in the particle SEM image, do not have obvious agglomeration interfaces, but may have tiny pores and point or line defects, which are different from powder particles that are the smallest units without structures such as packing and flocculation.

Herein, "long diameter" and "short diameter" refer to the two diagonals of a quadrilateral circumscribed around the center of a single primary particle, the longer diagonal being the long diameter r1 and the shorter diagonal being the short diameter r2.

The long diameter and the short diameter can be measured by conventional methods known in the art. For example, the long diameter r1 and short diameter r2 of the primary particle are measured using Sigma300 and software Avizo: the positive electrode plate is cut perpendicular to the large surface of the electrode plate using an argon ion beam to expose the cross section, and the cross section is photographed using a scanning electron microscope. A quadrilateral is circumscribed around the center of a single particle to obtain the two diagonals of the quadrilateral. The longer diagonal is the long diameter r1, and the shorter diagonal is the short diameter r2. Multiple SEM images of the cross-section of the positive electrode plate are tested, the (r1+r2)/2 of each particle is calculated, and the particles whose primary particle size satisfies: 50nm≤(r1+r2)/2≤200nm are recorded as the first lithium iron phosphate particles; the particles whose primary particle size satisfies: 500nm≤(r1+r2)/2≤1000nm are recorded as the second lithium iron phosphate particles; the particles whose primary particle size satisfies: 1000nm<(r1+r2)/2≤5000nm are recorded as the third lithium iron phosphate particles. The number of the first lithium iron phosphate particles is divided by the total number of the first lithium iron phosphate particles, the second lithium iron phosphate particles and the third lithium iron phosphate particles, which is used as the number proportion of the first lithium iron phosphate particles based on the total number of the first lithium iron phosphate particles, the second lithium iron phosphate particles and the third lithium iron phosphate particles. Similarly, the number of the second lithium iron phosphate particles is divided by the total number of the first lithium iron phosphate particles, the second lithium iron phosphate particles, and the third lithium iron phosphate particles, which is used as the number proportion of the second lithium iron phosphate particles based on the total number of the first lithium iron phosphate particles, the second lithium iron phosphate particles, and the third lithium iron phosphate particles; the number of the third lithium iron phosphate particles is divided by the total number of the first lithium iron phosphate particles, the second lithium iron phosphate particles, and the third lithium iron phosphate particles, which is used as the number proportion of the third lithium iron phosphate particles based on the total number of the first lithium iron phosphate particles, the second lithium iron phosphate particles, and the third lithium iron phosphate particles.

In some embodiments, based on the total number of the first lithium iron phosphate particles, the second lithium iron phosphate particles and the third lithium iron phosphate particles, the number proportion of the first lithium iron phosphate particles is 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, or a range consisting of any two of the above number proportions or a value within the range.

In some embodiments, based on the total number of the first lithium iron phosphate particles, the second lithium iron phosphate particles and the third lithium iron phosphate particles, the number proportion of the second lithium iron phosphate particles is 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, or a range consisting of any two of the above number proportions or a value within the range.

In some embodiments, based on the total number of the first lithium iron phosphate particles, the second lithium iron phosphate particles and the third lithium iron phosphate particles, the number proportion of the third lithium iron phosphate particles is 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, or a range consisting of any two of the above number proportions or a value within the range.

In some embodiments, the polydiversity index PDI of the lithium iron phosphate particles is ≥1.

Herein, "polydiversity index" or "PDI" is a parameter that describes how uniformly the particle size is distributed. The smaller the PDI, the more uniform the particle size distribution; conversely, the larger the PDI, the less uniform the particle size distribution.

PDI can be measured by conventional methods known in the art. For example, PDI is measured using Sigma300 and Avizo software: the positive electrode plate is cut perpendicular to the large surface of the electrode plate using an argon ion beam to expose the cross section, the cross section is photographed using a scanning electron microscope, and the long diameter (i.e. r1) of the lithium iron phosphate particles is statistically analyzed using the above-mentioned long diameter statistical method to obtain the PDI of the lithium iron phosphate particles, $PDI = \sigma/\bar{x}$,

$$\sigma \quad \sqrt{\frac{\sum_{i}^{n} {}_{1}(x_i - \bar{x})^2}{n}}$$

where $\sigma$ is the standard deviation of the particle size, $xi$ is the particle size value (i.e. the long diameter value), $\bar{x}$ is the average particle size (i.e. the average long diameter), and n is the total number of particles statistically analyzed. Since particles with 0 < long diameter <50nm are prone to adhesion, there are large errors in statistics and it is difficult to clearly identify them individually. Therefore, during the particle size statistic process, particles with a diameter of 0 < long diameter < 50nm are not included in the statistic range.

In some embodiments, the polydiversity index PDI of the lithium iron phosphate particles is 1≤PDI≤1.6. In some embodiments, the polydiversity index PDI of the lithium iron phosphate particles is 1.1≤PDI≤1.6. In some embodiments, the polydiversity index PDI of the lithium iron phosphate particles is 1.1, 1.2, 1.3, 1.4, 1.5, 1.6, or a range consisting of any two of the above values or a value within the range.

When the polydiversity index PDI of lithium iron phosphate particles meets the above requirements, the powder compacted density of lithium iron phosphate particles can be effectively improved by adjusting the particle size distribution appropriately, thereby improving the compacted density of the corresponding positive electrode plate, while also taking into account the gram capacity and material kinetic performance.

In some embodiments, the roundness T1 of the first lithium iron phosphate particles is greater than or equal to the roundness T3 of the third lithium iron phosphate particles; and/or

the roundness T2 of the second lithium iron phosphate particles is greater than or equal to the roundness T3 of the third lithium iron phosphate particles.

Herein, "roundness" refers to the ratio of the average short diameter to the average long diameter of primary particles.

When calculating the average short diameter and the average long diameter, considering that particles with 0 < long diameter <50nm are prone to adhesion, there are large errors in statistics and it is difficult to clearly identify them individually. Therefore, during the particle size statistic process, particles with a diameter of 0 < long diameter < 50nm are not included in the statistic range.

In some embodiments, the roundness T1 of the first lithium iron phosphate particles satisfies: 0.5≤T1≤1. In some embodiments, the roundness T1 of the first lithium iron phosphate particles satisfies: 0.6≤T1≤1. In some embodiments, the roundness T1 of the first lithium iron phosphate particles satisfies: 0.6<T1≤1. In some embodiments, the roundness T1 of the first lithium iron phosphate particles satisfies: 0.7≤T1≤1. In some embodiments, the roundness T1 of the first lithium iron phosphate particles satisfies: 0.8≤T1≤1. In some embodiments, the roundness T1 of the first lithium iron phosphate particles is 0.5, 0.55, 0.6, 0.65, 0.7, 0.75, 0.8, 0.85, 0.9, 0.95, 1, or a range consisting of any two of the above values or a value within the range.

In some embodiments, the roundness T2 of the second lithium iron phosphate particles satisfies: 0.5≤T2≤1. In some embodiments, the roundness T2 of the second lithium iron phosphate particles satisfies: 0.6≤T2≤1. In some embodiments, the roundness T2 of the second lithium iron phosphate particles satisfies: 0.7≤T2≤1. In some embodiments, the roundness T2 of the second lithium iron phosphate particles is 0.5, 0.55, 0.6, 0.65, 0.7, 0.75, 0.8, 0.85, 0.9, 0.95, 1, or a range consisting of any two of the above values or a value within the range.

In some embodiments, the roundness T3 of the third lithium iron phosphate particles satisfies: 0.1≤T3≤1. In some embodiments, the roundness T3 of the third lithium iron phosphate particles satisfies: 0.4≤T3≤1. In some embodiments, the roundness T3 of the third lithium iron phosphate particles satisfies: 0.5≤T3≤1. In some embodiments, the roundness T3 of the third lithium iron phosphate particles satisfies: 0.6≤T3≤1. In some embodiments, the roundness T3 of the third lithium iron phosphate particles is 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, or a range consisting of any two of the above values or a value within the range.

When the roundness T3 of the third lithium iron phosphate particles is ≥0.4, the secondary battery including the positive electrode plate of the present application has a higher gram capacity.

When the roundness T2 of the second lithium iron phosphate particles is >0.6, the secondary battery including the positive electrode plate of the present application has a higher energy density.

In some embodiments, the roundness T1 of the first lithium iron phosphate particles satisfies: $0.5 \leq T1 \leq 1$; the roundness T2 of the second lithium iron phosphate particles satisfies: $0.5 \leq T2 \leq 1$; and/or the roundness T3 of the third lithium iron phosphate particles satisfies: $0.1 \leq T3 \leq 1$.

In some embodiments, the roundness T1 of the first lithium iron phosphate particles satisfies: $0.5 \leq T1 \leq 1$; the roundness T2 of the second lithium iron phosphate particles satisfies: $0.5 \leq T2 \leq 1$; and/or the roundness T3 of the third lithium iron phosphate particles satisfies: $0.4 \leq T3 \leq 1$.

In some embodiments, the roundness T1 of the first lithium iron phosphate particles satisfies: $0.6 < T1 \leq 1$; the roundness T2 of the second lithium iron phosphate particles satisfies: $0.5 \leq T2 \leq 1$; and/or the roundness T3 of the third lithium iron phosphate particles satisfies: $0.4 \leq T3 \leq 1$.

In some embodiments, the roundness T1 of the first lithium iron phosphate particles satisfies: $0.8 \leq T1 \leq 1$; the roundness T2 of the second lithium iron phosphate particles satisfies: $0.7 \leq T2 \leq 1$; and/or the roundness T3 of the third lithium iron phosphate particles satisfies: $0.6 \leq T3 \leq 1$.

By skillfully selecting the roundness T1 of the first lithium iron phosphate particles, the roundness T2 of the second lithium iron phosphate particles, and the roundness T3 of the third lithium iron phosphate particles, the particles can naturally form close packing during the compaction process, and during the close packing process, the medium particles can smoothly slide into the gaps between the large particles, and the small particles can smoothly slide into the gaps between the large particles and between the large particles and the medium particles, thereby increasing the powder compacted density of the lithium iron phosphate particles, and thus increasing the compacted density of the corresponding positive electrode plate.

In some embodiments, the first lithium iron phosphate particle has a molecular formula of $Li_{m1}Fe_{x1}P_{y1}O_{z1}Q1_{q1}$, where Q1 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m1 \leq 1.15$, $0.9 \leq x1 \leq 1$, $0.95 \leq y1 \leq 1$, $3.5 \leq z1 \leq 4$, $0 \leq q1 \leq 0.1$, and/or,

the second lithium iron phosphate particle has a molecular formula of $Li_{m2}Fe_{x2}P_{y2}O_{z2}Q2_{q2}$, where Q2 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m2 \leq 1.15$, $0.9 \leq x2 \leq 1$, $0.95 \leq y2 \leq 1$, $3.5 \leq z2 \leq 4$, $0 \leq q2 \leq 0.1$, and/or,

the third lithium iron phosphate particle has a molecular formula of $Li_{m3}Fe_{x3}P_{y3}O_{z3}Q3_{q3}$, where Q3 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m3 \leq 1.15$, $0.9 \leq x3 \leq 1$, $0.95 \leq y3 \leq 1$, $3.5 \leq z3 \leq 4$, $0 \leq q3 \leq 0.1$.

In some embodiments, the first lithium iron phosphate particles have a molecular formula of $Li_{m1}Fe_{x1}P_{y1}O_{z1}Q_{q1}$, where m1 can be 0.95, 0.98, 1.00, 1.03, 1.05, 1.08, 1.10, 1.13, 1.15, x1 can be 0.9, 1.0, y1 can be 0.95, 0.98, 1.00, 1.03, 1.05, 1.08, 1.10, 1.13, 1.15, z1 can be 3.5, 3.6, 3.7, 3.8, 3.9, 4, and q1 can be 0, 0.01, 0.02, 0.03, 0.04, 0.05, 0.06, 0.07, 0.08, 0.09, 0.1.

In some embodiments, the second lithium iron phosphate particles have a molecular formula of $Li_{m2}Fe_{x2}P_{y2}O_{z2}Q_{q2}$, where m2 can be 0.95, 0.98, 1.00, 1.03, 1.05, 1.08, 1.10, 1.13, 1.15, x2 can be 0.9, 1.0, y2 can be 0.95, 0.98, 1.00, 1.03, 1.05, 1.08, 1.10, 1.13, 1.15, z2 can be 3.5, 3.6, 3.7, 3.8, 3.9, 4, and q2 can be 0, 0.01, 0.02, 0.03, 0.04, 0.05, 0.06, 0.07, 0.08, 0.09, 0.1.

In some embodiments, the third lithium iron phosphate particles have a molecular formula of $Li_{m3}Fe_{x3}P_{y3}O_{z3}Q3_{q3}$, where m3 can be 0.95, 0.98, 1.00, 1.03, 1.05, 1.08, 1.10, 1.13, 1.15, x3 can be 0.9, 1.0, y3 can be 0.95, 0.98, 1.00, 1.03, 1.05, 1.08, 1.10, 1.13, 1.15, z3 can be 3.5, 3.6, 3.7, 3.8, 3.9, 4, and q3 can be 0, 0.01, 0.02, 0.03, 0.04, 0.05, 0.06, 0.07, 0.08, 0.09, 0.1.

Modifying the first lithium iron phosphate particles, the second lithium iron phosphate particles and/or the third lithium iron phosphate particles by using the Q1, Q2 and/or Q3 elements helps to improve the ion transport capacity of the positive electrode active material. The above elements can create vacancies in the particle lattice or change the interatomic bond length, facilitating the movement of lithium ions in the lattice, thereby effectively improving the conductivity of the particles themselves, improving the kinetic properties of the positive electrode active materials, and at the same time improving capacity. In the present application, modification may specifically be doping and/or coating.

In some embodiments, Q1, Q2 and Q3 each independently include at least one of Ti, V, Mg and Nb.

In some embodiments, the content of Ti, V, Mg and/or Nb elements is 2400-3200ppm, calculated based on the total weight of the first lithium iron phosphate particles. In some embodiments, the content of Ti, V, Mg and/or Nb elements is 2600-3200ppm, calculated based on the total weight of the first lithium iron phosphate particles. In some embodiments, calculated based on the total weight of the first lithium iron phosphate particles, the content of Ti, V, Mg and/or Nb elements is 2400ppm, 2500ppm, 2600ppm, 2700ppm, 2800ppm, 2900ppm, 3000, 3100, 3200ppm, or a range consisting of any two of the above values or a value within the range.

In some embodiments, the content of Ti is 2400-3200ppm, calculated based on the total weight of the first lithium iron phosphate particles. In some embodiments, the content of Ti is 2600-3200ppm, calculated based on the total weight of the first lithium iron phosphate particles. In some embodiments, calculated based on the total weight of the first lithium iron phosphate particles, the content of Ti is 2400ppm, 2500ppm, 2600ppm, 2700ppm, 2800ppm, 2900ppm, 3000, 3100, 3200ppm, or a range consisting of any two of the above values or a value within the range.

In some embodiments, the content of Ti, V, Mg and/or Nb elements is 1300-3000ppm, calculated based on the total weight of the second lithium iron phosphate particles. In some embodiments, the content of Ti, V, Mg and/or Nb elements is 1400-2900ppm, calculated based on the total weight of the second lithium iron phosphate particles. In some embodiments, calculated based on the total weight of the second lithium iron phosphate particles, the content of Ti, V, Mg and/or Nb elements is 1300ppm, 1400ppm, 1500ppm, 1600ppm, 1700ppm, 1800ppm, 1900ppm, 2000ppm, 2100ppm, 2200ppm, 2300ppm, 2400ppm, 2500ppm, 2600ppm, 2700ppm, 2800ppm, 2900ppm, 3000ppm, or a range consisting of any two of the above values or a value within the range.

In some embodiments, the content of Ti is 1300-3000ppm, calculated based on the total weight of the second lithium iron phosphate particles. In some embodiments, the content of Ti is 1400-2900ppm, calculated based on the total weight of the second lithium iron phosphate particles. In some embodiments, calculated based on the total weight of the second lithium iron phosphate particles, the content of Ti is 1300ppm, 1400ppm, 1500ppm, 1600ppm, 1700ppm, 1800ppm, 1900ppm, 2000ppm, 2100ppm, 2200ppm, 2300ppm, 2400ppm, 2500ppm, 2600ppm, 2700ppm, 2800ppm, 2900ppm, 3000ppm, or a range consisting of any two of the above values or a value within the range.

In some embodiments, the content of Ti, V, Mg and/or Nb elements is 450-1200ppm, calculated based on the total weight of the third lithium iron phosphate particles. In some embodiments, the content of Ti, V, Mg and/or Nb elements is 500-1200ppm, calculated based on the total weight of the third lithium iron phosphate particles. In some embodiments, calculated based on the total weight of the third lithium iron phosphate particles, the content of Ti, V, Mg and/or Nb elements is 450ppm, 500ppm, 600ppm, 700ppm, 800ppm, 900ppm, 1000ppm, 1100ppm, 1200ppm, or a range consisting of any two of the above values or a value within the range.

In some embodiments, the content of Ti is 450-1200ppm, calculated based on the total weight of the third lithium iron phosphate particles. In some embodiments, the content of Ti is 500-1200ppm, calculated based on the total weight of the third lithium iron phosphate particles. In some embodiments, calculated based on the total weight of the third lithium iron phosphate particles, the content of Ti is 450ppm, 500ppm, 600ppm, 700ppm, 800ppm, 900ppm, 1000ppm, 1100ppm, 1200ppm, or a range consisting of any two of the above values or a value within the range.

In some embodiments, the content of Ti, V, Mg and/or Nb elements is 2400-3200ppm, calculated based on the total weight of the first lithium iron phosphate particles;

the content of Ti, V, Mg and/or Nb elements is 1300-3000ppm, calculated based on the total weight of the second lithium iron phosphate particles; and/or

the content of Ti, V, Mg and/or Nb elements is 450-1200ppm, calculated based on the total weight of the third lithium iron phosphate particles.

In some embodiments, calculated based on the total weight of the first lithium iron phosphate particles, the content of Ti is H1, and calculated based on the total weight of the third lithium iron phosphate particles, the content of Ti is H3, and H1/H3 is 2-6. In some embodiments, H1/H3 is 2.6-5.8. In some embodiments, H1/H3 is 2, 2.5, 2.6, 2.7, 3, 3.5, 3.8, 3.9, 4, 4.2, 4.5, 5, 5.2, 5.3, 5.5, 5.6, 5.8, 6, or a range consisting of any two of the above values or a value within the range.

The use of gradient doping design is conducive to forming natural particle distribution during the sintering process, increasing the width of the particle size distribution, and improving the compacted density of the powder, thereby increasing the compacted density of the electrode plate.

The content of Ti can be determined using conventional methods known in the art. For example, the Ti content may be tested with reference to GB/T 33822-2017.

In some embodiments, calculated based on the total weight of the first lithium iron phosphate particles, the carbon content of the first lithium iron phosphate particles is 0.8wt%, 0.9wt%, 1.0wt%, 1.1wt%, 1.2wt%, 1.3wt%, 1.4wt%, 1.5wt%, 1.6wt%, 1.7wt%, 1.8wt%, 1.9wt%, 2.0wt%, 2.1wt%, 2.2wt%, or a range consisting of any two of the above carbon contents or a value within the range.

In some embodiments, the carbon contained in the first lithium iron phosphate particles is coated on the particle surface. In some embodiments, the carbon contained in the first lithium iron phosphate particles is embodied in the particles. In some embodiments, the carbon contained in the first lithium iron phosphate particles is in part coated on the particle surface and in part embodied in the particles.

In some embodiments, calculated based on the total weight of the second lithium iron phosphate particles, the carbon content of the second lithium iron phosphate particles is 0.8wt%, 0.9wt%, 1.0wt%, 1.1wt%, 1.2wt%, 1.3wt%, 1.4wt%, 1.5wt%, 1.6wt%, 1.7wt%, 1.8wt%, 1.9wt%, 2.0wt%, 2.1wt%, 2.2wt%, or a range consisting of any two of the above carbon contents or a value within the range.

In some embodiments, the carbon contained in the second lithium iron phosphate particles is coated on the particle surface. In some embodiments, the carbon contained in the second lithium iron phosphate particles is embodied in the particles. In some embodiments, the carbon contained in the second lithium iron phosphate particles is in part coated on the particle surface and in part embodied in the particles.

In some embodiments, calculated based on the total weight of the third lithium iron phosphate particles, the carbon content of the third lithium iron phosphate particles is 0.8wt%, 0.9wt%, 1.0wt%, 1.1wt%, 1.2wt%, 1.3wt%, 1.4wt%, 1.5wt%, 1.6wt%, 1.7wt%, 1.8wt%, 1.9wt%, 2.0wt%, 2.1wt%, 2.2wt%, or a range consisting of any two of the above carbon contents or a value within the range.

In some embodiments, the carbon contained in the third lithium iron phosphate particles is coated on the particle surface. In some embodiments, the carbon contained in the third lithium iron phosphate particles is embodied in the particles. In some embodiments, the carbon contained in the third lithium iron phosphate particles is in part coated on the particle surface and in part embodied in the particles.

In some embodiments, calculated based on the total weight of all the lithium iron phosphate particles in the positive electrode active material, the carbon content of the lithium iron phosphate particles is 0.8wt%, 0.9wt%, 1.0wt%, 1.1wt%, 1.2wt%, 1.3wt%, 1.4wt%, 1.5wt%, 1.6wt%, 1.7wt%, 1.8wt%, 1.9wt%, 2.0wt%, 2.1wt%, 2.2wt%, or a range consisting of any two of the above carbon contents or a value within the range.

A second aspect of the present application provides a preparation method for a positive electrode plate, the preparation method for a positive electrode plate includes a preparation method for a positive electrode active material, and the preparation method for a positive electrode active material comprises the following steps:

providing raw materials containing at least a lithium source, an iron source, and a phosphorus source, and performing sintering for at least one time to obtain the positive electrode active material;
the iron source includes a first iron source, a second iron source and a third iron source, the average particle size of primary particles of the first iron source is 80-150nm, the average particle size of primary particles of the second iron source is 200-400nm, and the average particle size of primary particles of the third iron source is 550-2200nm.

In some embodiments, the lithium source is a lithium-containing compound. In some embodiments, the lithium source includes at least one of lithium dihydrogen phosphate, lithium oxalate, lithium carbonate, lithium oxide, lithium hydroxide, and lithium acetate. In some embodiments, the lithium source includes lithium carbonate.

In some embodiments, the iron source is an iron-containing compound. In some embodiments, the iron source includes at least one of ferric hydroxide, ferrous chloride, ferric oxide, ferric phosphate, ferric pyrophosphate, ferrous oxalate, iron powder, ferric nitrate, ferroferric oxide, and ferric oxyhydroxide. In some embodiments, the iron source includes ferric phosphate.

In some embodiments, the phosphorus source is a phosphoric acid compound. In some embodiments, the phosphorus source includes at least one of phosphoric acid, ferric phosphate, ammonium dihydrogen phosphate, and diammonium phosphate. In some embodiments, the phosphorus source includes ferric phosphate.

In some embodiments, the iron source and the phosphorus source may be the same substance. In some embodiments, ferric phosphate is used as both the iron source and the phosphorus source.

In some embodiments, the raw material further includes a carbon source. In some embodiments, the carbon source includes at least one of citric acid, glucose, sucrose, starch, fructose, and lactose. In some embodiments, the carbon source includes glucose.

In some embodiments, the sintering temperature is 750-820°C, and the sintering time is 10-14h.

In some embodiments, the sintering temperature is 750°C, 760°C, 770°C, 780°C, 790°C, 800°C, 810°C, 820°C, or a range consisting of any two of the above values or a value within the range.

In some embodiments, the sintering time is 10h, 11h, 12h, 13h, 14h, or a range consisting of any two of the above values or a value within the range.

A third aspect of the present application provides a secondary battery, which comprises the positive electrode plate of the first aspect of the present application or a positive electrode plate obtained by the preparation method of the second aspect of the present application.

A fourth aspect of the present application provides an electrical apparatus, which comprises the secondary battery according to the third aspect of the present application.

In addition, a secondary battery and an electrical apparatus in the present application are described below with reference to the drawings as appropriate.

In an embodiment of the present application, a secondary battery is provided.

In general, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

[Positive electrode plate]

The positive electrode plate comprises a positive electrode current collector and a positive electrode film layer arranged on at least one surface of the positive electrode current collector, and the positive electrode film layer comprises a positive electrode active material.

As an example, the positive electrode current collector has two opposite surfaces in its own thickness direction, and the positive electrode film layer is arranged on either or both of the two opposite surfaces of the positive electrode current collector.

In some embodiments, the positive electrode current collector may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other component, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil may be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative electrode active material may include at least one of the following materials: artificial graphite, natural graphite, soft carbon, hard carbon, silicon-based material, tin-based material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

[Electrolyte]

The electrolyte serves to conduct ions between the positive electrode plate and the negative electrode plate. The type of the electrolyte is not particularly limited in the present application, and can be selected according to requirements. For example, the electrolyte may be in a liquid state, a gelation state, or an all-solid state.

In some embodiments, the electrolyte is an electrolyte solution. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate , lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone, and ethylsulfonylethane.

In some embodiments, the electrolyte solution may further optionally include an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

[Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven fabric, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft package can be plastic, and as plastic, polypropylene, polybutylene terephthalate, and polybutylene succinate can be enumerated.

[Secondary battery]

The present application provides a secondary battery, and the secondary battery comprises the positive electrode plate of the present application.

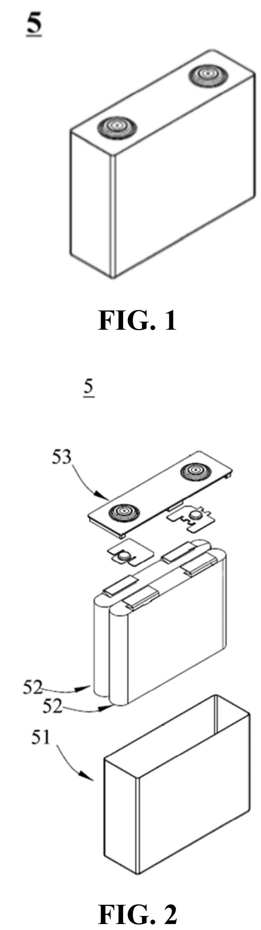

The shape of the secondary battery is not particularly limited in the present application, and the secondary battery may be a cylinder, a square, or any other shape. For example, FIG. 1 shows a secondary battery 5 with a square structure as an example.

In some embodiments, referring to FIG. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

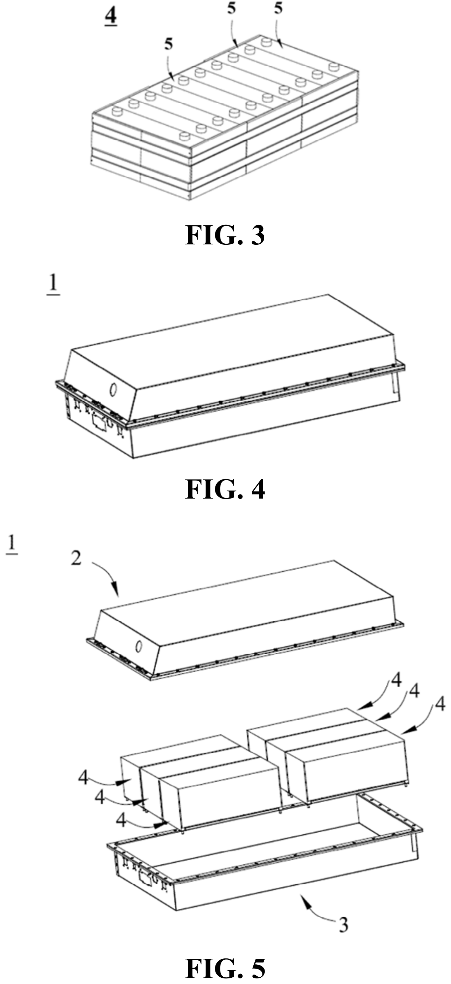

FIG. 3 shows a battery module 4 as an example. Referring to FIG. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

FIGS. 4 and 5 show a battery pack 1 as an example. Referring to FIGS. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

[Electrical apparatus]

In addition, the present application further provides an electrical apparatus, and the electrical apparatus includes the positive electrode plate of the present application or the secondary battery of the present application.

In some embodiments, the electrical apparatus of the present application can further include at least one of the battery module or the battery pack. The secondary battery, the battery module, or the battery pack may be used as a power source for the electrical apparatus, and may also be used as an energy storage unit for the electrical apparatus. The electrical apparatus may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module, or the battery pack can be selected according to its use requirements.

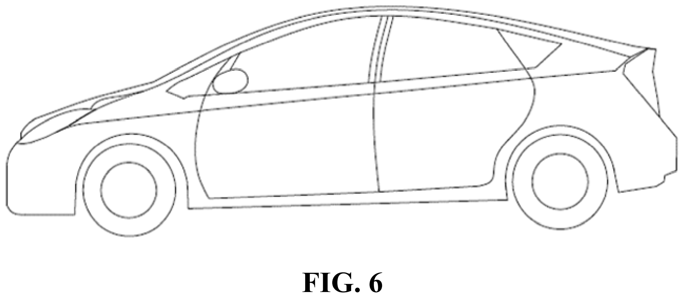

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

## EXAMPLES

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

Example 1

1) Preparation of positive electrode active material

The preparation method for the first iron phosphate, the second iron phosphate and the third iron phosphate is as follows: $TiO_2$, ferric sulfate solution and diammonium phosphate solution were uniformly mixed according to the Fe/P molar ratio and Ti content shown in Table 1, $H_2O_2$ solution with a molar ratio of 0.5 to 10 times that of Fe was added, the solid was separated after reacting for 1 to 2h, and sintered at a high temperature of 300°C to 600°C for 3 to 5h. By controlling the time of the reaction with $H_2O_2$ solution and the high temperature sintering time, the first iron phosphate, the second iron phosphate and the third iron phosphate were obtained respectively.

The first iron phosphate, the second iron phosphate, and the third iron phosphate were mixed in a weight ratio of 1:4:10 to serve as an iron source.

The Fe source, $Li_2CO_3$ and glucose were well mixed according to a ratio of Li/P (molar ratio) = 1.01 and a finished product carbon content of 1.25%, and then transferred to a sand mill for thorough grinding until the slurry particle size Dv50 was $0.38 \pm 0.01 \mu m$, and then spray-dried. The spray-dried material was sintered at a temperature of 800°C and a high-purity nitrogen atmosphere for 12h, naturally cooled, and then airflow-pulverized to reach a powder Dv50 of $1.4 \pm 0.2 \mu m$ to obtain the positive electrode active material.

2) Preparation of positive electrode plate

The above positive electrode active material, the binder polyvinylidene fluoride (PVDF) and the conductive agent acetylene black were mixed in a mass ratio of 96.5:2.0:1.5, the solvent N-methyl pyrrolidone was added, and the mixture was well stirred to obtain a positive electrode slurry;

Then, the positive electrode slurry was coated on an aluminum foil with a thickness of $13 \mu m$ at a single-sided coating surface density of $200 mg/cm^2$. After coating, the system was oven dried, cold pressed, and slit to obtain the positive electrode plate.

3) Preparation of negative electrode plate

The negative electrode active material artificial graphite, the thickener sodium carboxymethyl cellulose, the binder styrene butadiene rubber, and the conductive agent acetylene black were mixed in a mass ratio of 97:1:1:1, then deionized water was added, and the mixture was uniformly stirred with a vacuum mixer to obtain a negative electrode slurry;

then the negative electrode slurry was evenly coated on a copper foil with a thickness of $8 \mu m$ at a single-sided coating density of $140 mg/cm^2$, and after coating, the system was oven dried, cold pressed, and slit to obtain the negative electrode plate.

4) Preparation of separator

A polypropylene film was used as the separator.

5) Preparation of electrolyte solution

In a glove box in an argon atmosphere ($H_2O$<0.1ppm, $O_2$<0.1ppm), organic solvents ethylene carbonate (EC)/dimethyl carbonate (DMC) were mixed uniformly in a volume ratio of 1/1. A lithium salt $LiPF_6$ was dissolved in the organic solvent, the content of $LiPF_6$ in the solution was 1mol/L. The system was stirred uniformly to obtain an electrolyte solution.

6) Preparation of battery

After the electrode plates were baked in a 110°C high temperature oven for 7h to remove water, the positive electrode plate, the separator and the negative electrode plate were stacked in sequence, the separator was positioned between the positive electrode plate and the negative electrode plate to separate them, and then a bare battery cell was obtained by winding. A tab was welded to the bare battery cell, the bare battery cell was mounted into an aluminum case, baked in a vacuum oven at 100°C for 8h. Then, the electrolyte solution was injected and encapsulated to obtain an uncharged battery. Then, the uncharged battery was subjected to the procedures of standing, hot and cold pressing, formation, shaping, capacity testing and the like in sequence to obtain the lithium ion battery of Example 1.

Examples 2-16 and Comparative Examples 1-2 are similar to Example 1, and the main differences in the positive electrode active materials are specifically shown in Table 1, and the main differences in the preparation methods are specifically shown in Table 2.

**II. Battery performance test**

1. Performance test of positive electrode active material

1) Test method for particle size and roundness of primary particles of lithium iron phosphate particles

The long diameter r1 and short diameter r2 of the primary particle were measured using Sigma300 and software Avizo (default parameters): the positive electrode plate was cut perpendicular to the large surface of the electrode plate using an argon ion beam to expose the cross section, and the cross section was photographed using a scanning electron microscope. A quadrilateral was circumscribed around the center of a single particle to obtain the two diagonals of the quadrilateral. The longer diagonal is the long diameter r1, and the shorter diagonal is the short diameter r2.

The roundness of primary particles is T = average short diameter/average long diameter.

Since particles with 0 < r1 <50nm are prone to adhesion, there are large errors in statistics and it is difficult to clearly identify them individually. Therefore, during the particle size statistic process, particles with a diameter of 0 < r1 < 50nm are not included in the statistic range.

2) Test method for PDI of lithium iron phosphate particles

PDI was measured using Sigma300 and Avizo software (default parameters): the positive electrode plate was cut perpendicular to the large surface of the electrode plate using an argon ion beam to expose the cross section, the cross section was photographed using a scanning electron microscope, and the diameter (i.e. r1) of the lithium iron phosphate particles was statistically analyzed using the above-mentioned long diameter statistical method to obtain the PDI of the lithium iron phosphate particles, $PDI = \sigma/\bar{x}$,

$$\sigma \quad \sqrt{\frac{\sum_{i\ 1}^{n}\left(x_i - \bar{\bar{x}}\right)^2}{n}}$$

where $\sigma$ is the standard deviation of the particle size, $x_i$ is the particle size value (i.e. the long diameter value), $\bar{x}$ is the average particle size (i.e. the average long diameter), and n is the total number of particles statistically analyzed. As mentioned above, in the particle size statistic process, particles with a particle size of 0<r1<50nm are not within the statistic range.

3) Test method for Ti content

The Ti content was tested with reference to GB/T 33822-2017.

4) Test method for the number of the first lithium iron phosphate particles, the number of the second lithium iron phosphate particles, and the number of third lithium iron phosphate particles

The measurement was performed using Sigma 300 and software Avizo (default parameters): an argon ion beam was used to cut the positive electrode plate perpendicular to the large surface of the electrode plate to expose the cross section, which was photographed using a scanning electron microscope. The long diameter and short diameter of the lithium iron phosphate particles were statistically analyzed using the long diameter statistical method, and the particles were classified into the first lithium iron phosphate particles, the second lithium iron phosphate particles, or the third lithium iron phosphate particles and then counted separately. As mentioned above, in the particle size statistic process, particles with a particle size of 0<r1<50nm are not within the statistic range.

4) Test method for compacted density of positive electrode plate

When the electrode plate was coated on one side, the compacted density of the film layer on one side of the electrode plate was m/(V1-V2); when the electrode plate was coated on both sides, the compacted density of the film layer on one side of the electrode plate was m/[2×(V1-V2)], where m represents the weight of the film layer, V1 represents the volume of the electrode plate, and V2 represents the volume of the current collector. m can be obtained by subtracting the weight of the current collector from the weight of the electrode plate. The product of the surface area of the electrode plate and the thickness of the electrode plate is the volume V1 of the electrode plate. The product of the surface area of the electrode plate and the thickness of the current collector is V2. The thickness of the current collector and the thickness of the electrode plate were obtained by measuring the thickness of the empty foil in the tab area with a micrometer.

2. Battery performance test

1) Test method for charge gram capacity and discharge gram capacity of secondary batteries

Test of 0.1C rate performance: At room temperature (25°C), the battery was charged at a constant current of 0.1C to 3.75V, then charged at a constant voltage of 3.75V to a current of 0.05C, and left to stand for 5 min; then discharged at 0.1C to 2.0V to obtain the charge and discharge capacity.

2) Test method for energy density of secondary battery

The battery cells were placed at 25°C for 2h to ensure that the temperature of the battery cell was 25°C. After charging the battery cell at 0.33C to a charging cut-off voltage of 3.65V at 25°C, constant voltage charging was continued at the charging cut-off voltage until the current reached 0.05C and the charging was cut off (where C represents the rated capacity of the battery cell). After the battery cell was left to stand at 25°C for 1h, it was discharged at 0.33C at 25°C to a discharging cut-off voltage of 3.65V, and the total discharge energy of the battery cell was recorded as E0.

The battery cell was placed on an electronic balance until the weight became stable, and the battery cell weight value M0 was read.

Battery energy density = battery cell discharge energy E0/battery cell weight M0.

**III. Analysis of test results of examples and comparative examples**

The batteries of the examples and the comparative examples were prepared respectively according to the above method, and the performance parameters were measured. The parameters of the positive electrode active material are shown in Table 1, the parameters of the preparation method are shown in Table 2, and the performance test results are shown in Table 3.

Table 1. Parameters of positive electrode active material

| Example | First lithium iron phosphate particles | | | Second lithium iron phosphate particles | | | Third lithium iron phosphate particles | | | PDI | Ti content of first lithium iron phosphate particles/ Ti content of third lithium iron phosphate particles |
|---|---|---|---|---|---|---|---|---|---|---|---|
| | Roundness T1 | Ti content (ppm) | Number proportion | Roundness T2 | Ti content (ppm) | Number proportio n | Roundness T3 | Ti content (ppm) | Number proportion | | |
| Example 1 | 0.98 | 3200 | 19.23% | 0.92 | 2400 | 23.08% | 0.88 | 1200 | 57.69% | 1.11 | 2.7 |
| Example 2 | 0.95 | 2600 | 15.63% | 0.87 | 1500 | 18.75% | 0.81 | 650 | 65.63% | 1.58 | 4.0 |
| Example 3 | 0.7 | 2850 | 18.18% | 0.64 | 1750 | 23.64% | 0.54 | 550 | 58.18% | 1.38 | 5.2 |
| Example 4 | 0.75 | 3000 | 15.63% | 0.69 | 1900 | 21.88% | 0.60 | 550 | 62.50% | 1.39 | 5.5 |
| Example 5 | 0.92 | 2900 | 12.82% | 0.85 | 1750 | 20.51% | 0.78 | 550 | 66.67% | 1.39 | 5.3 |
| Example 6 | 0.6 | 2650 | 20.41% | 0.55 | 1600 | 22.45% | 0.80 | 500 | 57.14% | 1.51 | 5.3 |
| Example 7 | 0.81 | 2600 | 14.71% | 0.75 | 1600 | 19.12% | 0.65 | 500 | 66.18% | 1.32 | 5.2 |
| Example 8 | 0.83 | 2900 | 13.70% | 0.76 | 1500 | 20.55% | 0.70 | 500 | 65.75% | 1.36 | 5.8 |
| Example 9 | 0.87 | 2800 | 12.66% | 0.80 | 1400 | 21.52% | 0.59 | 500 | 65.82% | 1.30 | 5.6 |
| Example 10 | 0.96 | 2700 | 11.76% | 0.88 | 2000 | 17.65% | 0.89 | 1050 | 70.59% | 1.30 | 2.6 |
| Example 11 | 0.98 | 3150 | 12.35% | 0.90 | 1900 | 19.75% | 0.95 | 800 | 67.90% | 1.17 | 3.9 |
| Example 12 | 0.58 | 0 | 26.32% | 0.53 | 0 | 36.84% | 0.11 | 0 | 36.84% | 1.12 | / |
| Example 13 | 0.67 | 3100 | 5.71% | 0.62 | 2700 | 8.57% | 0.62 | 800 | 85.71% | 1.23 | 3.9 |
| Example 14 | 0.57 | 3050 | 9.43% | 0.52 | 2450 | 10.38% | 0.42 | 800 | 80.19% | 1.26 | 3.8 |
| Example 15 | 0.67 | 2750 | 8.13% | 0.62 | 1600 | 10.57% | 0.41 | 650 | 81.30% | 1.25 | 4.2 |
| Example 16 | 0.99 | 2700 | 10.00% | 0.91 | 1900 | 15.00% | 0.45 | 700 | 75.00% | 1.23 | 3.9 |
| Comparati ve Example 1 | 0.94 | 3100 | 66.67% | / | / | 0.00% | 0.65 | 3000 | 33.33% | 0.78 | 1.03 |

16

EP 4 645 443 A1

Table 2. Parameters of preparation method

| Example | First iron phosphate | | | Second iron phosphate | | | Third iron phosphate | | | Sintering temperature (°C) | Sintering time (h) |
|---|---|---|---|---|---|---|---|---|---|---|---|
| | Fe/P (molar ratio) | Average particle size (nm) | Iron content (ppm) | Fe/P (molar ratio) | Average particle size (nm) | Iron content (ppm) | Fe/P (molar ratio) | Average particle size (nm) | Iron content (ppm) | | |
| Example 1 | 0.972 | 150 | 3200 | 0.968 | 400 | 2400 | 0.952 | 2000 | 1200 | 800 | 12 |
| Example 2 | 0.978 | 90 | 2600 | 0.966 | 350 | 1500 | 0.954 | 1800 | 650 | 800 | 12 |
| Example 3 | 0.978 | 90 | 2500 | 0.966 | 350 | 2500 | 0.959 | 550 | 500 | 800 | 12 |
| Example 4 | 0.978 | 90 | 2500 | 0.966 | 350 | 2500 | 0.954 | 1800 | 1000 | 800 | 12 |
| Example 5 | 0.971 | 140 | 3000 | 0.968 | 400 | 3000 | 0.954 | 1800 | 1000 | 800 | 12 |
| Example 6 | 0.979 | 80 | 2650 | 0.962 | 200 | 1600 | 0.959 | 550 | 500 | 800 | 12 |
| Example 7 | 0.978 | 90 | 2500 | 0.962 | 200 | 2500 | 0.959 | 550 | 500 | 800 | 14 |
| Example 8 | 0.978 | 90 | 2500 | 0.962 | 200 | 2500 | 0.959 | 550 | 500 | 820 | 12 |
| Example 9 | 0.978 | 90 | 2500 | 0.962 | 200 | 2500 | 0.954 | 1800 | 1000 | 800 | 14 |
| Example 10 | 0.971 | 140 | 3000 | 0.968 | 400 | 3000 | 0.954 | 1800 | 1000 | 820 | 12 |
| Example 11 | 0.971 | 140 | 3000 | 0.968 | 400 | 3000 | 0.954 | 1800 | 1000 | 800 | 14 |
| Example 12 | 0.972 | 150 | 0 | 0.968 | 400 | 0 | 0.952 | 2000 | 0 | 800 | 12 |
| Example 13 | 0.972 | 150 | 3000 | 0.968 | 400 | 3000 | 0.951 | 2200 | 3000 | 800 | 12 |
| Example 14 | 0.978 | 90 | 2500 | 0.962 | 200 | 2500 | 0.959 | 550 | 500 | 800 | 10 |
| Example 15 | 0.978 | 90 | 2500 | 0.962 | 200 | 2500 | 0.959 | 550 | 500 | 750 | 12 |
| Example 16 | 0.972 | 150 | 3000 | 0.968 | 400 | 3000 | 0.951 | 2200 | 3000 | 820 | 12 |
| Comparative Example 1 | 0.988 | 50 | 3100 | | 0 | 0 | 0.955 | 1050 | 3000 | 800 | 12 |

EP 4 645 443 A1

17

Table 3. Performance test results

| Example | Electrode plate compacted density (g/cc) | 1C discharge capacity C1 (mAh/g) | Battery energy density (Wh/kg) |
|---|---|---|---|
| Example 1 | 2.483 | 139.5 | 192 |
| Example 2 | 2.621 | 128.2 | 187 |
| Example 3 | 2.545 | 126.5 | 179 |
| Example 4 | 2.522 | 127.4 | 179 |
| Example 5 | 2.502 | 136.2 | 189 |
| Example 6 | 2.452 | 118.2 | 161 |
| Example 7 | 2.531 | 125.1 | 176 |
| Example 8 | 2.599 | 127.3 | 184 |
| Example 9 | 2.582 | 129.6 | 186 |
| Example 10 | 2.656 | 131.1 | 193 |
| Example 11 | 2.640 | 132.8 | 195 |
| Example 12 | 2.587 | 117.8 | 169 |
| Example 13 | 2.473 | 127.8 | 176 |
| Example 14 | 2.452 | 126.6 | 172 |
| Example 15 | 2.464 | 134.2 | 184 |
| Example 16 | 2.469 | 133.7 | 183 |
| Comparative Example 1 | 2.35 | 133.2 | 174 |

According to the above results, the positive electrode plates in Examples 1-16 all include positive electrode active materials, the positive electrode active materials include lithium iron phosphate particles, the lithium iron phosphate particles include first lithium iron phosphate particles, second lithium iron phosphate particles and third lithium iron phosphate particles, wherein the long diameter of primary particles of the lithium iron phosphate particles is r1, the short diameter of primary particles of the lithium iron phosphate particles is r2, and the primary particle size of the first lithium iron phosphate particles satisfies: $50nm \leq (r1+r2)/2 \leq 200nm$; the primary particle size the second lithium iron phosphate particles satisfies: $500nm \leq (r1+r2)/2 \leq 1000nm$; the primary particle size of the third lithium iron phosphate particles satisfies: $1000nm < (r1+r2)/2 \leq 5000nm$; based on the total number of the first lithium iron phosphate particles, the second lithium iron phosphate particles and the third lithium iron phosphate particles, the number proportion of the first lithium iron phosphate particles is 5-27%; the number proportion of the second lithium iron phosphate particles is 8-37%; and the number proportion of the third lithium iron phosphate particles is 36-86%. From the comparison between Examples 1-16 and Comparative Example 1, it can be seen that the positive electrode plates of the embodiments of the present application have a good compacted density.

As can be seen from the comparison of Examples 1-11 and 13-16 with Example 12, when the roundness T3 of the third lithium iron phosphate particles is $\geq 0.4$, the secondary batteries including the positive electrode plate of the present application have a higher gram capacity.

As can be seen from the comparison of Examples 1-5, 7-11, 13 and 15-16 with Examples 6, 12 and 14, when the roundness T2 of the second lithium iron phosphate particles is $>0.6$, the secondary batteries including the positive electrode plate of the present application have a higher energy density.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

**Claims**

1. A positive electrode plate, wherein the positive electrode plate includes a positive electrode active material, the positive electrode active material includes lithium iron phosphate particles, the lithium iron phosphate particles include first lithium iron phosphate particles, second lithium iron phosphate particles and third lithium iron phosphate particles, and wherein,

   the long diameter of primary particles of the lithium iron phosphate particles is r1, the short diameter of primary particles of the lithium iron phosphate particles is r2, the primary particle size of the first lithium iron phosphate particles satisfies: $50nm \leq (r1+r2)/2 \leq 200nm$; the primary particle size of the second lithium iron phosphate particles satisfies: $500nm \leq (r1+r2)/2 \leq 1000nm$; the primary particle size of the third lithium iron phosphate particles satisfies: $1000nm < (r1+r2)/2 \leq 5000nm$;
   based on the total number of the first lithium iron phosphate particles, the second lithium iron phosphate particles and the third lithium iron phosphate particles, the number proportion of the first lithium iron phosphate particles is 5-27%; the number proportion of the second lithium iron phosphate particles is 8-37%; and the number proportion of the third lithium iron phosphate particles is 36-86%.

2. The positive electrode plate according to claim 1, wherein based on the total number of the first lithium iron phosphate particles, the second lithium iron phosphate particles and the third lithium iron phosphate particles:

   the number proportion of the first lithium iron phosphate particles is 11.76%-20.41%;
   the number proportion of the second lithium iron phosphate particles is 17.65%-23.44%; and/or
   the number proportion of the third lithium iron phosphate particles is 57.14%-70.59%.

3. The positive electrode plate according to claim 1 or 2, wherein the polydiversity index PDI of the lithium iron phosphate particles is $\geq 1$.

4. The positive electrode plate according to claim 1 or 3, wherein the polydiversity index PDI of the lithium iron phosphate particles is $1 \leq PDI \leq 1.6$.

5. The positive electrode plate according to any one of claims 1 to 4, wherein the roundness T1 of the first lithium iron phosphate particles is greater than or equal to the roundness T3 of the third lithium iron phosphate particles; and/or the roundness T2 of the second lithium iron phosphate particles is greater than or equal to the roundness T3 of the third lithium iron phosphate particles.

6. The positive electrode plate according to any one of claims 1 to 5, wherein the roundness T1 of the first lithium iron phosphate particles satisfies: $0.6 < T1 \leq 1$; the roundness T2 of the second lithium iron phosphate particles satisfies: $0.5 \leq T2 \leq 1$; and/or the roundness T3 of the third lithium iron phosphate particles satisfies: $0.4 \leq T3 \leq 1$.

7. The positive electrode plate according to any one of claims 1 to 6, wherein the roundness T1 of the first lithium iron phosphate particles satisfies: $0.8 \leq T1 \leq 1$; the roundness T2 of the second lithium iron phosphate particles satisfies: $0.7 \leq T2 \leq 1$; and/or the roundness T3 of the third lithium iron phosphate particles satisfies: $0.6 \leq T3 \leq 1$.

8. The positive electrode plate according to any one of claims 1 to 7, wherein the first lithium iron phosphate particle has a molecular formula of $Li_{m1}Fe_{x1}P_{y1}O_{z1}Q1_{q1}$, where Q1 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m1 \leq 1.15$, $0.9 \leq x1 \leq 1$, $0.95 \leq y1 \leq 1$, $3.5 \leq z1 \leq 4$, $0 \leq q1 \leq 0.1$, and/or,

   the second lithium iron phosphate particle has a molecular formula of $Li_{m2}Fe_{x2}P_{y2}O_{z2}Q2_{q2}$, where Q2 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m2 \leq 1.15$, $0.9 \leq x2 \leq 1$, $0.95 \leq y2 \leq 1$, $3.5 \leq z2 \leq 4$, $0 \leq q2 \leq 0.1$, and/or,
   the third lithium iron phosphate particle has a molecular formula of $Li_{m3}Fe_{x3}P_{y3}O_{z3}Q3_{q3}$, where Q3 includes at least one of Al, Na, K, Mg, Cu, Mn, Cr, Zn, Pb, Ca, Co, Ni, Sr, Nb, V, Ti, B, S, Si, N, F, Cl, and Br, $0.95 \leq m3 \leq 1.15$, $0.9 \leq x3 \leq 1$, $0.95 \leq y3 \leq 1$, $3.5 \leq z3 \leq 4$, $0 \leq q3 \leq 0.1$.

9. The positive electrode plate according to claim 8, wherein the Q1, Q2 and Q3 each independently include at least one of Ti, V, Mg and Nb.

10. The positive electrode plate according to claim 8 or 9, wherein the content of Ti, V, Mg and/or Nb elements is 2400-3200ppm, calculated based on the total weight of the first lithium iron phosphate particles;

the content of Ti, V, Mg and/or Nb elements is 1300-3000ppm, calculated based on the total weight of the second lithium iron phosphate particles; and/or
the content of Ti, V, Mg and/or Nb elements is 450-1200ppm, calculated based on the total weight of the third lithium iron phosphate particles.

11. A preparation method for a positive electrode plate, wherein the preparation method for a positive electrode plate includes a preparation method for a positive electrode active material, and the preparation method for a positive electrode active material comprises the following steps:

providing raw materials containing at least a lithium source, an iron source, and a phosphorus source, and performing sintering for at least one time to obtain the positive electrode active material;
the iron source includes a first iron source, a second iron source and a third iron source, the average particle size of primary particles of the first iron source is 80-150nm, the average particle size of primary particles of the second iron source is 200-400nm, and the average particle size of primary particles of the third iron source is 550-2200nm.

12. The preparation method according to claim 11, wherein the sintering temperature is 750-820°C and the sintering time is 10-14h.

13. A secondary battery, comprising the positive electrode plate according to any one of claims 1 to 10 or a positive electrode plate prepared using the preparation method according to claim 11 or 12.

14. An electrical apparatus, comprising the secondary battery according to claim 13.

<u>5</u>

## FIG. 1

<u>5</u>

## FIG. 2

**FIG. 3**

**FIG. 4**

**FIG. 5**

**FIG. 6**

## INTERNATIONAL SEARCH REPORT

| International application No. |
|---|
| **PCT/CN2025/079362** |

| A. | CLASSIFICATION OF SUBJECT MATTER |
|---|---|
| | H01M4/136(2010.01)i; H01M4/1397(2010.01)i; H01M10/0525(2010.01)i |

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS: CNTXT; WPABS; VEN; ENTXT; CNKI: 正极, 磷酸铁锂, 第一, 第二, 第三, 混合, 共混, 一次颗粒, 大, 小, 长径, 短径, 粒径, positive electrode, lithium iron phosphate, LiFePO4, first, second, third, mix, blend, primary particle, large, small, long diameter, short diameter, particle size

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114426265 A (HUNAN YUNENG NEW ENERGY BATTERY MATERIAL CO., LTD.) 03 May 2022 (2022-05-03) description, paragraphs 5-42 and 122-129 | 11-14 |
| A | CN 113451548 A (BYD CO., LTD.) 28 September 2021 (2021-09-28) description, paragraphs 4-15 | 1-14 |
| A | CN 114068921 A (BYD CO., LTD.) 18 February 2022 (2022-02-18) description, paragraphs 5-35 | 1-14 |
| A | CN 117038967 A (XIAMEN HITHIUM ENERGY STORAGE TECHNOLOGY CO., LTD.) 10 November 2023 (2023-11-10) entire document | 1-14 |
| A | CN 114068919 A (BYD CO., LTD.) 18 February 2022 (2022-02-18) entire document | 1-14 |
| A | KR 20220014809 A (SAMSUNG ELECTRONICS CO., LTD. et al.) 07 February 2022 (2022-02-07) entire document | 1-14 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 May 2025** | **24 May 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/079362**

| Patent document cited in search report | | | Publication date (day/month/year) | Patent family member(s) | | | Publication date (day/month/year) |
|---|---|---|---|---|---|---|---|
| CN | 114426265 | A | 03 May 2022 | None | | | |
| CN | 113451548 | A | 28 September 2021 | WO | 2021190490 | A1 | 30 September 2021 |
| | | | | CN | 113451548 | B | 09 September 2022 |
| | | | | IN | 202227060465 | A | 02 December 2022 |
| | | | | KR | 20220159413 | A | 02 December 2022 |
| | | | | EP | 4131497 | A1 | 08 February 2023 |
| | | | | US | 2023115744 | A1 | 13 April 2023 |
| | | | | JP | 2023519287 | A | 10 May 2023 |
| | | | | IN | 536594 | B | 03 May 2024 |
| | | | | JP | 7516543 | B2 | 16 July 2024 |
| CN | 114068921 | A | 18 February 2022 | None | | | |
| CN | 117038967 | A | 10 November 2023 | None | | | |
| CN | 114068919 | A | 18 February 2022 | None | | | |
| KR | 20220014809 | A | 07 February 2022 | US | 2022037649 | A1 | 03 February 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410269102